(19) Europäisches Patentamt

European Patent Office

Office européen des brevets

(11) **EP 1 132 354 A1**

(12) **EUROPEAN PATENT APPLICATION**

(43) Date of publication:
**12.09.2001   Bulletin 2001/37**

(21) Application number: **00200853.0**

(22) Date of filing: **09.03.2000**

(51) Int Cl.⁷: **C04B 28/02**, C04B 24/16,
E21B 33/13
// (C04B28/02, 14:10, 24:08,
24:16)

(84) Designated Contracting States:
**AT BE CH CY DE DK ES FI FR GB GR IE IT LI LU
MC NL PT SE**
Designated Extension States:
**AL LT LV MK RO SI**

(71) Applicant: **Sofitech N.V.
1180 Brussels (BE)**

(72) Inventors:
• **Bin Ibrahim, Samat
Singapore 730307 (SG)**

• **Sithamparam, Kumaravel
43200 Cheras, Selangor Darul Ehsan (MY)**
• **Huizenga, Robert
Lecompton, KS 66050 (US)**
• **Oakley, Douglas
Bradford-on-Avon, Wiltshire, BA15 2RR (GB)**

(74) Representative: **Menès, Catherine
Etudes et Productions Schlumberger
Service Propriété Intellectuelle
1, rue Henri Becquerel
92142 Clamart Cédex (FR)**

(54) **Multifunctional additive to cement slurries**

(57)     The invention relates to a multi-purposes additive comprise of the combination of a high molecular weight water-soluble polymers useful to impart to an aqueous solution an increased viscosity and withstand hostile environment, a vegetable oil and an organophilic clay and that provides excellent fluid loss control, effective free fluid control, hence improved slurry stability, gas migration control, right angle set characteristics and viscosification of interstitial water. The invention also relates to cement slurries comprising the multi-purpose additive of the present invention.

EP 1 132 354 A1

## EP 1 132 354 A1

**Description**

The present invention concerns the field of petroleum service and supply industries, in particular that of cementing the annulus surrounding the casing in an oil, gas, water, geothermal or analogous well. More precisely, the invention relates to additives to cement slurry formulations that impart several beneficial properties to cement slurries. The invention also relates to fluids including the said additive.

After a well has been drilled, casing is lowered down the hole and, in most cases, a cement is injected into the annular gap that extends between the casing and the underground wall of the well, both to consolidate the well and to isolate various zones so as to control the flow of fluids present at different levels in the formations.

The cement slurry is injected into the casing and is pumped up via the annular gap so that it rises up inside the gap. Once it has been put into position, the cement is allowed to set. A cement slurry is a highly concentrated solution of solid particles. The aqueous base is generally constituted by sea water or brine, and as a result it includes all sorts of ionic species to which there are added various organic or inorganic additives in order to modify properties such as setting time, fluid loss due to filtration into certain types of drilled formation, cement density, anti-settling to prevent the formation of free water, gas migration control, dispersing agents. Among those numerous properties, it is an acknowledged fact within the industry that gas migration control, filtration and free fluid controls are all important cement slurry properties required for a successful cement job design.

Currently, there are many additive products that are employed to help properly control these properties. However, those additives are individually available and their efficiency often depends on the presence of other additives in the slurry and in most times resulting in slurry systems that are complicated and difficult to engineer and execute.

It is therefore desirable to provide a multi-purposes additive that provide at least most of the desired cement slurry properties : excellent fluid loss control, effective free fluid control, hence improved slurry stability, gas migration control, right angle set characteristics, viscosification of interstitial water as well as versatility in the use for spacer formulations so that the design of cement slurries will be dramatically simplified.

It has been found that those highly desirable properties can be achieved with the combination of a high molecular weight water-soluble polymers useful to impart to an aqueous solution an increased viscosity and withstand hostile environment, a vegetable oil and an organophilic clay.

Many synthetic polymer gels have been developed for water control treatment of subterranean reservoirs. Among those, attention is drawn to the polymers described in U.S. Patent No. 5,382,371 that withstand hostile environment where high temperature and/or salinity and/or hardness of formation waters are encountered.

Surprisingly, it has been found that this type of polymer gels could constitute the main component of a three-component multipurpose additive according to the present invention.

Among the various polymers described in U.S. Patent No. 5,382,371, it has been found that the most useful polymers are those among the group consisting essentially of

- polymers produced from a monomer composition consisting essentially of at least one hydrophilic unsaturated amide and at least one hydrophilic vinyl-containing sulfonic acids or sulfonate salts thereof
- polymers produced from a monomer composition consisting essentially of at least one hydrophilic N-vinyl lactam, at least one hydrophilic vinyl-containing sulfonic acid or sulfonate salts thereof and at least one hydrophilic unsaturated amide having the formula

The unsaturated amide is preferably represented by the formula where R' is an unsaturated radical selected from ethynyl(vinyl), propenyl, isopropenyl, 1-butenyl, isobutenyl (2-methyl-1-propenyl), 1-pentenyl, 1-isopentenyl(3-methyl-1-butenyl) and 1-methyl-1-butenyl and most preferably is acrylamide.

The vinyl-containing sulfonic acid is preferably represented by the formula:

2

$$R - C = C - (X)_{0-1} - SO_3M$$

where R is methyl, ethyl, or H and provided further that at least one of the R groups on the terminal carbon of the vinyl group is H and the other is H or methyl, M is H, Na+, K+, Li+, a quaternary ammonium salt, Ca++ or Mg+ and X is

or                    or

where n is an integer of 1-5, preferably 1-3 and R''' is individually selected from 1-3 carbon atom alkyl groups or H.

Most prefered vinyl-containing sulfonic acid is sodium-2-acrylamido-2-methylpropane sulfonate (sodium AMPS) represented by the formula

The n-vinyl lactam monomer is represented by the formula where R is hydrogen, methyl or ethyl and is preferably N-vinyl-2-, pyrrolidone.

Specifically useful water-soluble polymers are for instance copolymers of N-vinyl-2-pyrrolidone (NVP) and acrylamide (Am), N-vinyl-2-pyrrolidone and methylacrylamide and N-vinyl-2-pyrrolidone and dimethylacrylamide. For convenience, the terms NVL and UA will be used to refer to n-vinyl lactam and the unsaturated amide. The monomer NVL:UA weight ratios ranges preferably from about 80:20 to 95:5. A most preferred water-soluble polymers is thus a NVP:Am in a weight ratio of about 90:10.

Another preferred class of polymers consist of terpolymers of N-vinyl-2-pyrrolidone (NVP), acrylamide (Am) and sodium-2-acrylamido-2-methylpropane sulfonate (sodium AMPS). The NVP is typically present in an amount within the range 20-40 weight percent based on the weight of all monomers incorporated into the polymers. The AM is usually present in the range of 5-15 weight percent and the sodium AMPS in an amount within the range of 50-70. A most preferred ratio is believed to be NVP:Am,NaAMPS of about 25:10:65.

To be noted that most polyacrylamides hydrolyze to acrylic acid which is sensitive to calcium precipitation. The selected water-solubles polymers of the present invention has a limited amount of acrylamide and the amount of hydrolisis is further limited by steric hindrance. This property is believed to be the key of their effectiveness in harsh environnement.

The vegetable oil is preferably selected among environmentally acceptable oil such as corn oil, palm oil, castor oil, and cottonseed oil. Especially suitable are highly refined palm oil.

The weight ratios of the three components can vary but preferably the water-soluble polymer is present as from about 25% to about 35 weight percent, the vegetable oil from about 60 to about 70% and the organic clay from about 3 to about 7%.

The three-component additive of the present invention, singularly but in synergy with most cement additives leads to simplified cement slurry system with enhanced fluid properties. The synergistic properties of the components enable desired slurry properties to be easily achieved at low concentrations and the multiple functions that it imparts results in simplified slurry designs.

The main advantages of the three-component additive is the versatility (tri-functionality) it offers and simplicity of the cement slurry designs. The benefits include gas migration control, good set characteristics (right angle or short transition time), excellent fluid loss control, effective free fluid control, hence improved slurry stability, viscosification of interstitial water as well as versatility in the use for spacer formulations.

It is a further object of the present invention to provide cement composition comprising a cementitious material, an aqueous fluid and the three-component additive. The aqueous fluid is typically fresh water or seawater. The cement composition may also comprise conventional additives such as a set retarder, a set accelerator, a dispersing agent, an anti-foam agent, an extender. The cementitious material is usually a Class G or Class H Portland cement that may be also partially replaced by silica. The three-component additive of the present invention is usually used in an amount of 0.05 to 0.3 gallons per sack of cement, and preferably in an amount of 0.1 to 0.2 gallons per sack of cement.

The following description show that in accordance with the present invention, the incorporation of the three-component additive according to the present invention enhances the properties of the cement slurries exhibiting the benefits of this incorporation.

All tests have been performed with a three-component additive prepared by mixing 65 weight percent of double refined palm oil, 5 weight percent of organophilic clay (TRUVIS, available from MI Drilling Fluids, Houston) and 30 weight percent of a commercially available water soluble polymer, HE300. HE300 is though to be a terpolymer N-vinyl-2-pyrrolidone (NVP), acrylamide (Am) and sodium-2-acrylamido-2-methylpropane sulfonate (sodium AMPS), having a molecular weight of about 3,000,000 availbable from Drilling Specialities Co., Bartlesville, Oklahoma.

**A. Gas Migration Control**

The test was out-sourced to an external commercial laboratory, the Sherry Laboratories of Lafayette, Louisiana. The following protocol has been used : the components were weighted and blended according to API Spec. 10. The resulting blend was then conditioned and brought to circulating temperature in 35 minutes. The slurry was then transferred to the cell of a Gas Migration Tester. The cell was set up with the following pressure configuration: 1000 psi on the piston to simulate hydrostatic pressure, 300 psi gas pressure on the bottom of the cell and 200 psi gas pressure on the top of the cell which created a 100 psi up differential through the column column. Once the system had reached 160°F (approximately 45 minutes), the test was started. Over the next hours, the test temperature was evenly raised to 190°F. The test simulates a bottom hole circulating temperature (BHCT) of 160°F and a bottom hole static temperature (BHST) of 190°F.

The test was performed on Class G cement with the following slurry designs:

Design A:

Class G cement + 0.005 gal/sk of the D047 anti-foam agent, 0.25 gal/sk of the three-component additive, 0.25 gal/sk of the D604M dispersing agent, 0.80 gal/sk of the D075 silicate extender, 0.30 gal/sk of the D110 liquid high temperature retarder and sea water. D047, D604M, D075 and D110 are available from Schlumberger Dowell, Houston. A sack of cement has a mass of 941b. A gallon corresponds to 3.785 liters.

The slurry properties are the following: density: 12.6 ppg, Yield:2.21 ft$^3$/sk.

At 6:45 into the test, the cement pore pressure began to drop and the fluid loss ceased. At 13:15 of the test, the pressure levelled off indicating that the cement was set. The test was run for an additional two hours once this point was reached. At no time during the transition period or during the two hours that the test was run while the cement was set, was gas produced. The tested design is thus successful in not allowing gas migration.

Design B:

Class G cement + 0.005 gal/sk of the D047 anti-foam agent, 0.10 gal/sk of the three-component additive, 0.20 gal/sk of the D080 dispersing agent, 0.30 gal/sk of the D110 liquid high temperature retarder and sea water. D047, D080 and D110 are available from Schlumberger Dowell, Houston.

The slurry properties are the following: density: 15.8.ppg, Yield:1.19 ft$^3$/sk.

At 5:25 into the test, the cement pore pressure began to drop and the fluid loss ceased. At 10:50 of the test, the pressure levelled off indicating that the cement was set. The test was run for an additional two hours once this point was reached. At no time during the transition period or during the two hours that the test was run while the cement was set, was gas produced. The tested design is thus successful in not allowing gas migration.

**B. Set Characteristics**

Cement slurries have been tested over a range of temperatures of 80°F and 250°F BHCT at 12.6 and 15.9 ppg densities. The slurries showed good set characteristics - either right angle sets or short transition times.

Some of the slurry designs and thickening time charts are shown below.

**B.1 SYSTEM : 12.6 PPG, 135°F BHCT**

Class G cement + 0.050 gal/sk of the D047 anti-foam agent, 0.20 gal/sk of the three-component additive, 0.22 gal/sk of the D080 dispersing agent, 0.20 gal/sk of the D110 liquid high temperature retarder, 0,40 ga/sk of the D075 silicate extender and sea water.

The slurry properties are the following: density: 12.6.ppg, Yield:2.18 ft$^3$/sk.

The BHST and BHCT temperatures are respectively of 178°F and 135 °F.

**Rheology at 135°F**

Assuming the slurry follows the Bingham Law : Plastic viscosity = 12.0 cP, Yield stress = 4 lbf/100ft2

**Gel strength** (Fann reading): 2 deg. after 10 sec; 5 deg. after 10 min.

**Fluid Loss :** 55 mL in 29 min at 135°F and 1000 psi. API Fluid Loss113 mL.

| Thickening Time | |
| --- | --- |
| Consistency | Time |
| 40.00 BC | 04:20 hr:mn |
| 70.00 BC | 04:50 hr:mn |
| 100.00 BC | 05:02 hr:mn |

**' Free Water :** 0.0 mL/250 mL after two hours of sedimentation at 135°F, with an inclination of 45 degrees.

**B.2 SYSTEM 15.9 PPG, 135°F BHCT**

Class G cement + 0.050 gal/sk of the D047 anti-foam agent, 0.10 gal/sk of the three-component additive, 0.16 gal/sk of the D080 dispersing agent, 0.010 gal/sk of the D110 liquid high temperature retarder, 0,10 ga/sk of the D075 silicate extender and sea water.

The slurry properties are the following: density: 15.9.ppg, Yield: 1.18 ft$^3$/sk.

The BHST and BHCT temperatures are respectively of 178°F and 135 °F.

**Rheology at 135°F**

Assuming the slurry follows the Bingham Law : Plastic viscosity = 39.0 cP, Yield stress = 20.34 lbf/100ft2

**Gel strength :** (Fann reading): 3 deg. after 10 sec; 9 deg. after 10 min.

**Fluid Loss :** 26 mL in 30min at 135°F and 1000 psi. API Fluid Loss : 52mL

| Thickening Time | |
| --- | --- |
| Consistency | Time |
| 40.00 BC | 02:22 hr:mn |
| 70.00 BC | 02:32 hr:mn |
| 100.00 BC | 02:37 hr:mn |

Even at this relatively low temperature, the slurry viscosity increases from 40 BC to 100 BC within a few minutes, so that the cement slurry can be considered as a Right Angle Set cement.

Free Water : 0.0 mL/250 mL after two hours of sedimentation at 135°F, with an inclination of 45 degrees.

Compressive Strength : 4160 psi after 24 hours

## B.3 SYSTEM 15.9 PPG, 180°F BHCT

The dry phase comprises Class G cement and 35% by weight of cement of silica. The liquid additive are indicated by weight of cement. They include 0.050 gal/sk of the D047 anti-foam agent, 0.160 gal/sk of the three-component additive, 0.25 gal/sk of the D080 dispersing agent, 0.010 gal/sk of the D110 liquid high temperature retarder, and sea water.

The slurry properties are the following: density: 15.9.ppg, Yield:1.54t$^3$/sk.

The BHST and BHCT temperatures are respectively of 244°F and 135 °F.

### Rheology at 180°F

Assuming the slurry follows the Bingham Law : Plastic viscosity = 97.5 cP, Yield stress = 13 lbf/100ft2

**Gel strength :** (Fann reading): 4 deg. after 10 sec; 14 deg. after 10 min.

**Fluid Loss :** 23 mL in 30 min at 180 °F and 1000 psi. API Fluid Loss : 46mL

| Thickening Time | |
| --- | --- |
| Consistency | Time |
| 40.00 BC | 03:50 hr:mn |
| 70.00 BC | 04:00 hr:mn |
| 100.00 BC | 04:10 hr:mn |

**Free Water :** 0.0 mL/250 mL after two hours of sedimentation at 180°F, with an inclination of 45 degrees.

**Compressive Strength :** 4160 psi after 24 hours

## B.4 SYSTEM 15.9 PPG, 275°F BHCT

The dry phase comprises Class G cement and 35% by weight of cement of silica. The liquid additive are indicated by weight of cement. They include 0.050 gal/sk of the D047 anti-foam agent, 0.150 gal/sk of the three-component additive, 0.30 gal/sk of the D080 dispersing agent, 0.10 gal/sk of the D110 liquid high temperature retarder, and sea water.

The slurry properties are the following: density: 15.8.ppg, Yield:1.57t$^3$/sk.

The BHST and BHCT temperatures are respectively of 275°F and 250 °F.

### Rheology at 180°F

Assuming the slurry follows the Bingham Law : Plastic viscosity = 112.2 cP, Yield stress = 16 lbf/100ft2

**Gel strength :** (Fann reading): 7 deg. after 10 sec; 25 deg. after 10 min.

**Fluid Loss** : 42 mL in 11min at 250 °F and 1000 psi. API Fluid Loss: 137mL

| Thickening Time | |
| --- | --- |
| Consistency | Time |
| 40.00 BC | 06:16 hr:mn |
| 70.00 BC | 06:18 hr:mn |
| 100.00 BC | 06:19 hr:mn |

The slurry viscosity increases from 40 BC to 100 BC within three minutes, so that the cement slurry can be considered as a Right Angle Set cement.

Free Water : 0.0 mL/250 mL after two hours of sedimentation at 194°F, with an inclination of 45 degrees.

Compressive Strength : 3088 psi after 24 hours

**Claims**

1.  An additive suitable for cement slurries comprising a combination of a high molecular weight water-soluble polymer useful to impart to an aqueous solution an increased viscosity and withstand hostile environment, a vegetable oil and an organophilic clay.

2.  The additive of claim 1, wherein said water-soluble polymer useful to impart to an aqueous solution an increased viscosity and withstand hostile environment is selected among the group consisting essentially of

    -   polymers produced from a monomer composition consisting essentially of at least one hydrophilic unsaturated amide and at least one hydrophilic vinyl-containing sulfonic acids or sulfonate salts thereof

    -   polymers produced from a monomer composition consisting essentially of at least one hydrophilic N-vinyl lactam, at least one hydrophilic vinyl-containing sulfonic acid or sulfonate salts thereof and at least one hydrophilic unsaturated amide having the formula

3.  The additive of claim 1, wherein said water-soluble polymer useful to impart to an aqueous solution an increased viscosity and withstand hostile environment is a copolymer acrylamide - sulfonic acid is sodium-2-acrylamido-2-methylpropane sulfonate (sodium AMPS).

4.  The additive of claim 2, wherein said water-soluble polymer useful to impart to an aqueous solution an increased viscosity and withstand hostile environment is a terpolymer N-vinyl-2-pyrrolidone - acrylamide - sulfonic acid is sodium-2-acrylamido-2-methylpropane sulfonate (sodium AMPS).

5.  The additive of any of the preceding claims wherein the vegetable oil is selected among corn oil, palm oil, castor oil, and cottonseed oil.

6.  The additive of any of the preceding claims wherein the water-soluble polymer is present as from about 25 to about 35 weight percent, the vegetable oil from about 60 weight percent to about 70 and the organic clay from about 3 to about 7 weight percent.

7.  The additive of claim 6 comprising about 30 weight percent, of the water-soluble polymer , about 65 weight percent of the vegetable oil and about 5 weight percent of the he organic clay.

8.  A cement composition comprising an aqueous solution, cement and the three-component additive according to any of claims 1 to 7.

9.  The cement composition of claim 8, wherein the aqueous solution is seawater.

10. The cement composition of claim 8 or 9 further comprising at least one of the following additives : a set retarder, a set accelerator, a dispersing agent, an anti-foam agent, an extender.

11. The cement composition according to any of claims 8 to 10 wherein the three-component additive is used in an amount of 0.05 to 0.3 gallons per sack of cement, and preferably in an amount of 0.1 to 0.2 gallons per sack of cement.

**European Patent Office**

## EUROPEAN SEARCH REPORT

Application Number

EP 00 20 0853

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 26991 A (SOFITECH NV ;SCHLUMBERGER CA LTD (CA); CLARIANT GMBH (DE); SCHLUMB) 3 June 1999 (1999-06-03) * page 8, line 22-26; table 4 * | 1,3 | C04B28/02 C04B24/16 E21B33/13 //(C04B28/02, 14:10,24:08, 24:16) |
| A | DE 33 02 168 A (HOECHST AG) 26 July 1984 (1984-07-26) * claim 1; example 3B * | 1,4 | |
| A,D | EP 0 115 836 A (PHILLIPS PETROLEUM CO) 15 August 1984 (1984-08-15) * claim 1 * | 1-4 | |
| A | DE 198 30 760 A (SUEDDEUTSCHE KALKSTICKSTOFF) 13 January 2000 (2000-01-13) * claim 1 * | | |
| A | US 5 580 379 A (COWAN KENNETH M) 3 December 1996 (1996-12-03) | | |
| A | US 4 717 488 A (SEHEULT JAMES M ET AL) 5 January 1988 (1988-01-05) * column 1, line 47-55 * * column 2, line 54-61 * | | TECHNICAL FIELDS SEARCHED (Int.Cl.7) C04B E21B C09K |

The present search report has been drawn up for all claims

| Place of search | Date of completion of the search | Examiner |
|---|---|---|
| THE HAGUE | 27 July 2000 | Daeleman, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 20 0853

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2000

| Patent document cited in search report | | Publication date | Patent family member(s) | | Publication date |
|---|---|---|---|---|---|
| WO 9926991 | A | 03-06-1999 | DE 19752093 A | | 29-07-1999 |
| DE 3302168 | A | 26-07-1984 | AT 17706 T | | 15-02-1986 |
| | | | BR 8400263 A | | 28-08-1984 |
| | | | CA 1228373 A | | 20-10-1987 |
| | | | DE 3361986 D | | 13-03-1986 |
| | | | EP 0116671 A | | 29-08-1984 |
| | | | JP 1695569 C | | 17-09-1992 |
| | | | JP 3061835 B | | 24-09-1991 |
| | | | JP 59138694 A | | 09-08-1984 |
| | | | MX 163275 B | | 31-03-1992 |
| | | | NO 840239 A | | 25-07-1984 |
| | | | SU 1473720 A | | 15-04-1989 |
| | | | US 4587283 A | | 06-05-1986 |
| EP 0115836 | A | 15-08-1984 | US 4644020 A | | 17-02-1987 |
| | | | US 4951921 A | | 28-08-1990 |
| | | | AU 553817 B | | 31-07-1986 |
| | | | AU 2372384 A | | 02-08-1984 |
| | | | CA 1254026 A | | 16-05-1989 |
| | | | DE 3486230 D | | 25-11-1993 |
| | | | DE 3486230 T | | 17-02-1994 |
| | | | DK 39684 A | | 29-07-1984 |
| | | | ES 529231 D | | 16-01-1987 |
| | | | ES 8702927 A | | 01-04-1987 |
| | | | ES 544294 D | | 16-10-1986 |
| | | | ES 8700721 A | | 16-01-1987 |
| | | | FI 840341 A | | 29-07-1984 |
| | | | HU 35700 A | | 29-07-1985 |
| | | | MX 163467 B | | 18-05-1992 |
| | | | NO 840322 A,B, | | 30-07-1984 |
| | | | PL 245928 A | | 13-08-1985 |
| | | | PT 78028 A,B | | 01-02-1984 |
| | | | TR 22394 A | | 23-03-1987 |
| | | | US 5080809 A | | 14-01-1992 |
| | | | US 5186257 A | | 16-02-1993 |
| | | | US 5326854 A | | 05-07-1994 |
| | | | US 6030928 A | | 29-02-2000 |
| | | | US 5382371 A | | 17-01-1995 |
| | | | YU 13984 A | | 31-12-1986 |
| DE 19830760 | A | 13-01-2000 | WO 0002827 A | | 20-01-2000 |
| US 5580379 | A | 03-12-1996 | US 5499677 A | | 19-03-1996 |
| US 4717488 | A | 05-01-1988 | AU 593345 B | | 08-02-1990 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 00 20 0853

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2000

| Patent document cited in search report | Publication date | Patent family member(s) | | Publication date |
|---|---|---|---|---|
| US 4717488 A | | AU 7184187 A | | 29-10-1987 |
| | | CA 1280587 A | | 26-02-1991 |
| | | EP 0243067 A | | 28-10-1987 |
| | | JP 2512470 B | | 03-07-1996 |
| | | JP 62257980 A | | 10-11-1987 |
| | | NO 173880 C | | 23-02-1994 |

EPO FORM P0459

For more details about this annex : see Official Journal of the European Patent Office, No. 12/82